# EUROPÄISCHE PATENTSCHRIFT

(11) **EP 3 049 314 B1**
(45) Veröffentlichungstag und Bekanntmachung des Hinweises auf die Patenterteilung: **25.10.2017**
(21) Anmeldenummer: 14756054.4
(22) Anmeldetag: 28.08.2014
(51) Int. Cl.: B62D 35/02, B60G 7/00, B60R 13/08

(54) **UNTERBODEN-VERKLEIDUNGSTEIL EINER RADACHSE UND BAUGRUPPE MIT EINEM UNTERBODEN-VERKLEIDUNGSTEIL**
UNDERBODY PANELLING PART OF A WHEEL AXLE AND SUBASSEMBLY COMPRISING AN UNDERBODY PANELLING PART
CARÉNAGE DE BAS DE CAISSE D'UN ESSIEU ET ENSEMBLE DOTÉ D'UN CARÉNAGE DE BASE DE CAISSE

(30) Priorität: 24.09.2013 DE 102013219211
(43) Veröffentlichungstag der Anmeldung: 03.08.2016
(73) Patentinhaber: Bayerische Motoren Werke Aktiengesellschaft, 80809 München (DE)
(72) Erfinder: HENNIG, Matthias, 81541 München (DE); KOHLHUBER, Markus, 85301 Schweitenkirchen (DE); KÖNIG, Roland, 82392 Habach (DE); LEICHT, Rasmus, 85386 Eching (DE); SCHMIDT, Roland, 82131 Stockdorf (DE); SCHOLZ, Hubert, 81543 München (DE); SEETHALER, Ludwig, 85241 Hebertshausen (DE); TESCH, Gregor, 85748 Garching (DE); FAUSER, Markus, 81379 München (DE)
(86) Internationale Anmeldenummer: PCT/EP2014/068261
(87) Internationale Veröffentlichungsnummer: WO 2015/043866

(56) Entgegenhaltungen:
- DE-A1-102010 018 779
- FR-A1- 2 961 468
- JP-A- 2010 132 208

## Beschreibung

Die Erfindung betrifft ein Unterboden-Verkleidungsteil einer Radachse im Bereich des Radkastens eines Kraftfahrzeugs sowie eine Baugruppe mit einem derartigen Unterboden-Verkleidungsteil.

Vor dem Hintergrund der Diskussion um eine Reduktion des CO₂-Ausstoßes bei Kraftfahrzeugen spielen verbrauchssenkende Maßnahmen eine immer größere Rolle. Hierzu zählt auch das Senken des Luftwiderstands des Fahrzeugs. Während beim Karosseriedesign seit Langem nach optimalen Lösungen gesucht wird, ist die Verringerung des Luftwiderstands des Unterbodens des Fahrzeugs noch nicht sehr weit fortgeschritten. Hier bieten sich jedoch große Verbesserungsmöglichkeiten, da der Unterboden immerhin etwa zu 20 % zum Gesamtluftwiderstand beitragen kann.

Im Bereich der Vorderachse mit den lenkbaren Rädern stellt sich die besondere Herausforderung, eine Unterbodenverkleidung zu schaffen, die der veränderlichen Radstellung Rechnung trägt.

In der DE 10 2010 018 779 A1 ist hierzu allgemein vorgeschlagen, ein Verkleidungsteil in Abhängigkeit von einer Schwenkbewegung eines Lenkerelements bewegbar am Kraftfahrzeug zu halten. Die Art der Anbringung wird jedoch offen gelassen.

Aufgabe der Erfindung ist es, ein kostengünstiges Unterboden-Verkleidungsteil zu schaffen, das einfach im Bereich einer Radachse im Radkasten anzuordnen ist und eine wirksame Verringerung des Luftwiderstands bewirken kann.

Hierzu ist ein Unterboden-Verkleidungsteil einer Radachse im Bereich des Radkastens eines Kraftfahrzeugs mit einem im Wesentlichen plattenförmigen Grundkörper ausgebildet, wobei eine erste am Grundkörper ausgebildete Lagerstelle vorgesehen ist, die drehbar mit einem Querlenker des Kraftfahrzeugs verbindbar ist, sowie eine zweite am Grundkörper ausgebildete Lagerstelle, die mit einem Radträger oder einer Spurstange koppelbar ist, sodass das Verkleidungsteil mit Schwenken des Radträgers um die erste Lagerstelle verschwenkbar ist. Die drehbare Verbindung mit dem Querlenker sorgt für einen Schwenkpunkt, der sehr nahe am Drehpunkt des Radträgers liegt, sodass die Verschwenkung des Unterboden-Verkleidungsteils dem Schwenken des Radträgers möglichst angenähert ist. Auf diese Weise wird eine übermäßige Spaltbildung vermieden. Die Schwenkbewegung, die notwendig ist, um der Lenkbewegung zu folgen, wird über die zweite Lagerstelle durch ein die Lenkbewegung ausführendes Bauteil, nämlich den Radträger oder die Spurstange, an das Verkleidungsteil übertragen.

Das Unterboden-Verkleidungsteil besteht vorzugsweise aus einem leichten, steifen, witterungsbeständigen und stoßunempfindlichen Material, beispielsweise einem faserverstärkten Kunststoffmaterial.

Die Erfindung betrifft darüber hinaus eine Baugruppe mit einem erfindungsgemäßen Unterboden-Verkleidungsteil. Die Baugruppe umfasst ferner einen Pendelstab, mit dem die zweite Lagerstelle mit dem Radträger oder der Spurstange verbunden ist.

Der Pendelstab kann beidseitig über Kugelgelenke gelagert sein.

Alternativ hierzu sieht die erfindungsgemäße Baugruppe vor, dass eine starre Verbindung vorgesehen ist, über die die zweite Lagerstelle mit dem Radträger oder der Spurstange verbunden ist.

Es ist auch denkbar, eine längenveränderbare Verbindung zwischen dem Unterboden-Verkleidungsteil und dem Radträger vorzusehen, um bei Kollisionen mit angrenzenden Bauteilen z.B. in Extremlagen der Lenkung oder bei Verengungen des Radkastens durch starke Verschmutzung, Eis- oder Schneeablagerungen einen Ausgleichsspielraum für das Unterboden-Verkleidungsteil zu schaffen. Die Verbindung zwischen dem Unterboden-Verkleidungsteil und dem Radträger könnte beispielsweise auf Druck und/oder auf Zug elastisch nachgiebig ausgelegt sein.

An der ersten Lagerstelle ist vorzugsweise ein Drehgelenk vorgesehen, das im eingebauten Zustand das Unterboden-Verkleidungsteil mit dem Querlenker verbindet. Es hat sich herausgestellt, dass an dieser Stelle es ausreichend ist, lediglich einen Rotationsfreiheitsgrad vorzusehen.

Das Drehgelenk ist vorzugsweise ein abgedichtetes Drehgleitlager, beispielsweise aus einem geeigneten Kunststoff.

Die Positionierung der Anlenkpunkte am Unterboden-Verkleidungsteil und dem Radträger bzw. der Spurstange erfolgt mit dem Ziel einer minimierten Relativbewegung des Unterboden-Verkleidungsteils zum gelenkten und gefederten Rad. Über den Pendelstab lassen sich die Winkelbewegungen ausgewogen auf alle kinematischen Zustände verteilen, sodass keine zu großen Relativwinkel zum Ausgangszustand im Geradeauslauf und zu den angrenzenden Bauteilen entstehen.

Ein zwischen dem Unterboden-Verkleidungsteil und angrenzenden Bauteilen notwendigerweise entstehender Spalt lässt sich durch Anbringen eines flexiblen Materials, beispielsweise einer Bürstendichtung, abdecken.

Das Unterboden-Verkleidungsteil kann auch eine zumindest teilweise Abdichtung des Radkastenbereichs gegen das Eindringen bzw. Herausdrängen von Luftströmen bewirken.

Das Unterboden-Verkleidungsteil hat vorzugsweise einen in Fahrzeuglängsrichtung vorderseitigen Rand, der nach oben gewölbt ist. Die gewölbte Geometrie verhindert zuverlässig, dass ein Luftstrom von oben eine Kraft auf das Unterboden-Verkleidungsteil ausüben kann.

Muss bei mit Kühlluft durchströmen Radkästen für eine gute Entlüftung des Radkastens gesorgt sein, kann das Unterboden-Verkleidungsteil optional an seinem zum Fahrzeugheck gerichteten Ende einen Luftkanal begrenzen, der im Wesentlichen horizontal ausgerichtet ist. Dieser Luftkanal ermöglicht ein Ausströmen von Luft aus dem Radkasten in einem im Wesentlichen horizontal gerichteten Luftstrom ohne Verwirbelungen, die den Luftwiderstand erhöhen würden.

Der optionale Luftkanal lässt sich durch einen Spalt zwischen dem Unterboden-Verkleidungsteil und einem angrenzenden Karosserieabschnitt bilden, durch den die Luft parallel entlang des Unterbodens des Fahrzeugs strömen kann.

Durch das Vorsehen eines derartigen Unterboden-Verkleidungsteils ist es möglich, die im Bereich der Vorderfront des Fahrzeugs vorgesehene Staulippe bzw. einen dort angeordneten Staukörper zu verkleinern oder ganz einzusparen.

Die Gesamtgeometrie des Unterboden-Verkleidungsteils kann durch den Fachmann der Geometrie des Radkastenbereichs und dem erforderlichen Freigang des Unterboden-Verkleidungsteils in allen vorkommenden Betriebszuständen und Fahrzuständen angepasst werden.

Die Erfindung wird nachfolgend anhand eines Ausführungsbeispiels mit Bezug auf die beigefügten Figuren näher beschrieben. In den Figuren zeigen:
- Figur 1 eine schematische Ansicht eines Unterbodens eines Fahrzeugs mit einer erfindungsgemäßen Baugruppe mit einem erfindungsgemäßen Unterboden-Verkleidungsteil;
- Figur 2 eine schematische perspektivische Ansicht der Baugruppe mit einem erfindungsgemäßen Unterboden-Verkleidungsteil; und
- Figur 3 eine schematische Schnittansicht der Vorderfront eines Fahrzeugs, die die Luftströmungen im Bereich eines erfindungsgemäßen Unterboden-Verkleidungsteils verdeutlicht.

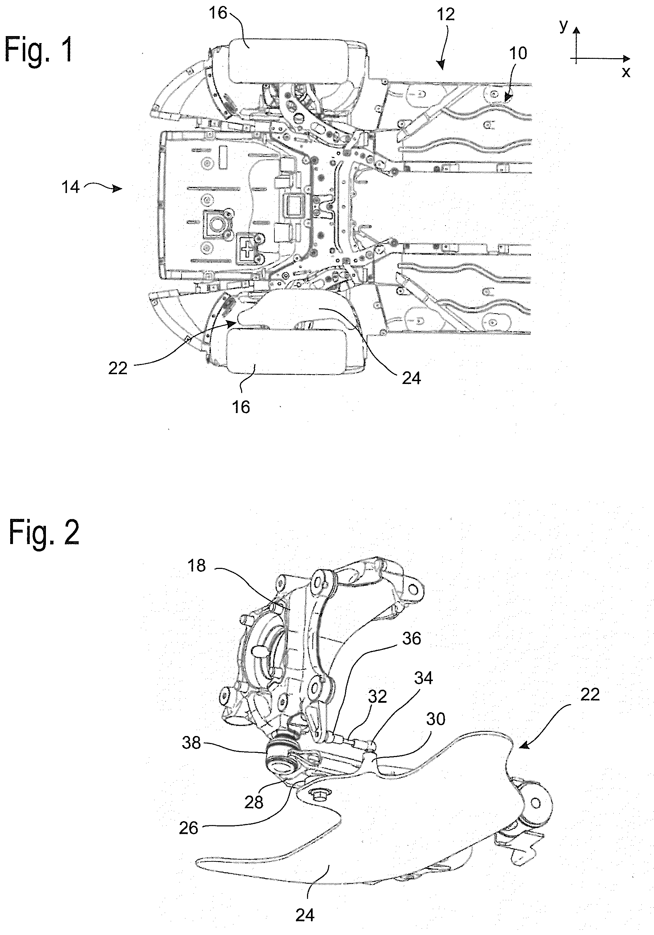

Figur 1 zeigt einen Unterboden 10 eines Kraftfahrzeugs 12 im Bereich eines Frontendes 14 des Kraftfahrzeugs 12. An einer vorderen Radachse sind die beiden Vorderräder 16 angeordnet, die jeweils an einem Radträger 18 (siehe Figur 2) auf bekannte Weise befestigt sind.

Im Bereich des Radkastens 20 ist ein Unterboden-Verkleidungsteil 22 angeordnet, das die Bauteile der Radaufhängung nach unten abdeckt.

Das Unterboden-Verkleidungsteil 22 hat einen im Wesentlichen plattenförmigen Grundkörper 24.

Am Grundkörper 24 ist eine erste Lagerstelle 26 ausgebildet, die eine Verbindung mit einem Querlenker 28 des Fahrzeugs 12 ermöglicht. Eine zweite, mit Abstand zur ersten Lagerstelle 26 am Grundkörper 24 ausgebildete, gegenüber der Fläche des Grundkörpers 24 vorstehende zweite Lagerstelle 30 ermöglicht eine Verbindung mit dem Radträger 18. Alternativ ist es auch möglich, über die zweite Lagerstelle 30 eine Verbindung mit einer Spurstange des Fahrzeugs 12 herzustellen.

Das Verkleidungsteil 22 mit seinen nachfolgend erläuterten Befestigungsmitteln zur Anbringung an Radaufhängungsteilen bildet gegebenenfalls mit den Teilen, an denen es befestigt ist, eine Baugruppe.

Die Verbindung zwischen der ersten Lagerstelle 26 und dem Querlenker 28 erfolgt über ein abgedichtetes Drehgleitlager aus einem geeigneten Kunststoff, das eine Drehbewegung um eine einzige Rotationsachse erlaubt.

Die Verbindung des Unterboden-Verkleidungsteils 22 mit dem Radträger 18 über die zweite Lagerstelle 30 zur Übertragung einer Lenkbewegung bzw. anderer Bewegungen des Radträgers 18 erfolgt hier über einen Pendelstab 32, der beidseitig über ein Kugelgelenk 34, 36 an der zweiten Lagerstelle 30 bzw. dem Radträger 18 angelenkt ist. Die zweite Lagerstelle 30 ist hier als Sitz des Kugelgelenks 34 des Pendelstabs 32 ausgebildet.

Über den Pendelstab kann eine beliebige Bewegung des Radträgers 18 bzw. der Spurstange übertragen und in eine Schwenkbewegung des Unterboden-Verkleidungsteils 22 um die durch das Drehgleitlager der ersten Lagerstelle 26 vorgegebene Rotationsachse umgesetzt werden.

Alternativ wäre es auch möglich, die zweite Lagerstelle 30 starr mit dem Radträger 18 oder der Spurstange zu verbinden.

Die Verbindung der ersten Lagerstelle 26 mit dem Querlenker 28 liegt so nah wie möglich bei einem Drehpunkt 38 des Radträgers 18 bezüglich des Querlenkers 28, damit das Unterboden-Verkleidungsteil 22 der Lenkbewegung möglichst identisch folgen kann und um übermäßige Spaltbildungen zu vermeiden.

Die dennoch notwendigerweise bestehenden Spalte zwischen dem Unterboden-Verkleidungsteil 22 und angrenzenden Bauteilen können über (nicht dargestellte) Bürstendichtungen entlang des Randes des Verkleidungsteils 22 abgedeckt werden. Die Bürstendichtung kann auch entlang eines feststehenden Bauteils z.B. entlang des Radkastens 20 oder des Unterbodens angebracht sein.

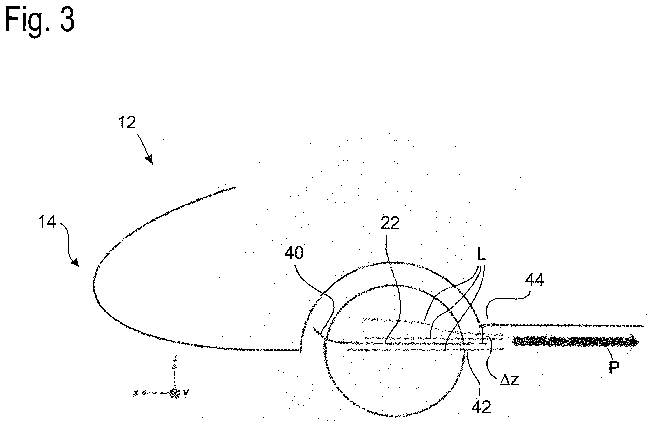

Figur 3 zeigt, dass das Unterboden-Verkleidungsteil 22 an seinem vorderen Ende einen vorderseitigen Rand 40 aufweist, der nach oben gewölbt ist. Die Wölbung erstreckt sich vorzugsweise über den gesamten vorderseitigen Rand des Unterboden-Verkleidungsteils 22 und dient einer Lenkung des Luftstroms entlang des Unterbodens 10 in einer Form, dass dieser nicht von oben auf das Unterboden-Verkleidungsteil 22 einwirken kann.

Die Luftströmung, die sich entlang und unterhalb des Unterboden-Verkleidungsteils 22 ausbildet, ist mittels dem Pfeil L in Figur 3 verdeutlich. Es ist zu erkennen, dass die Luft im Wesentlichen ohne Verwirbelungen parallel zum horizontalen Verlauf des Grundkörpers 24 des Unterboden-Verkleidungsteils 22 entlang strömt. Die Pfeile K zeigen die Kühlluftströmung aus dem Inneren des Radkastens 20.

Zwischen dem rückseitigen Ende 42 des Unterboden-Verkleidungsteils 22 und einem Abschnitt 44 der angrenzenden Karosserie bzw. Fahrzeugverkleidung, die sich in Längsrichtung an den Radkasten 20 anschließt, ist in diesem Beispiel ein Luftspalt mit der vertikalen Höhe Δz ausgebildet, sodass zwischen dem Unterboden-Verkleidungsteil 22 und dem Abschnitt 44 der Fahrzeugkarosserie ein Luftkanal ausgebildet ist, der die aus dem Radkasten 20 ausströmende Luft parallel zum Unterboden des Fahrzeugs 12 abströmen lässt (siehe Pfeil P in Figur 3). Auf diese Weise werden Verwirbelungen und somit ein erhöhter Luftwiderstand vermieden.

Das gesamte Unterboden-Verkleidungsteil 22 inklusive der beispielsweise daran angeformten ersten und zweiten Lagerstellen 26, 30 ist hier aus einem faserverstärkten Kunststoffmaterial gefertigt.

## Patentansprüche

1. Unterboden-Verkleidungsteil (22) einer Radachse im Bereich des Radkastens (20) eines Kraftfahrzeugs (12), das einen im Wesentlichen plattenförmigen Grundkörper (24) aufweist,
**dadurch gekennzeichnet, dass** eine erste am Grundkörper (24) ausgebildete Lagerstelle (26) vorgesehen ist, die drehbar mit einem Querlenker (28) des Kraftfahrzeugs (12) verbindbar ist, sowie eine zweite am Grundkörper (24) ausgebildete Lagerstelle (30) vorgesehen ist, die mit einem Radträger (18) oder einer Spurstange koppelbar ist, sodass das Unterboden-Verkleidungsteil (22) mit Schwenken des Radträgers (18) um die erste Lagerstelle (26) verschwenkbar ist.

2. Baugruppe mit einem Unterboden-Verkleidungsteil nach Anspruch 1, **dadurch gekennzeichnet, dass** die zweite Lagerstelle (30) über einen Pendelstab (32) mit dem Radträger (18) oder der Spurstange verbunden ist.

3. Baugruppe nach Anspruch 2, **dadurch gekennzeichnet, dass** der Pendelstab (32) beidseitig über Kugelgelenke (34, 36) gelagert ist.

4. Baugruppe mit einem Unterboden-Verkleidungsteil nach Anspruch 1, **dadurch gekennzeichnet, dass** die zweite Lagerstelle über eine starre Verbindung mit dem Radträger (18) oder der Spurstange verbunden ist.

5. Baugruppe nach einem der Ansprüche 2 bis 4, **dadurch gekennzeichnet, dass** an der ersten Lagerstelle (26) ein Drehgelenk vorgesehen ist, das das Unterboden-Verkleidungsteil (22) mit dem Querlenker (28) verbindet.

6. Baugruppe nach Anspruch 5, **dadurch gekennzeichnet, dass** das Drehgelenk ein abgedichtetes Drehgleitlager ist.

7. Baugruppe nach einem der Ansprüche 2 bis 6, **dadurch gekennzeichnet, dass** ein Spalt zwischen dem Unterboden-Verkleidungsteil (22) und einem angrenzenden Bauteil durch eine Bürstendichtung abgedeckt ist.

8. Baugruppe nach einem der Ansprüche 2 bis 7, **dadurch gekennzeichnet, dass** das Unterboden-Verkleidungsteil (22) einen in Fahrzeuglängsrichtung (x) vorderseitigen Rand (40) hat, der nach oben gewölbt ist.

9. Baugruppe nach einem der Ansprüche 2 bis 8, **dadurch gekennzeichnet, dass** das Unterboden-Verkleidungsteil (22) an seinem zum Fahrzeugheck gerichteten Ende (42) einen Luftkanal begrenzt, der im Wesentlichen horizontal ausgerichtet ist.

10. Baugruppe nach Anspruch 9, **dadurch gekennzeichnet, dass** der Luftkanal durch einen Spalt (Δz) zwischen dem Unterboden-Verkleidungsteil (22) und einem angrenzenden Karosserieabschnitt (44) gebildet ist.

## Claims

1. An underbody panelling part (22) of a wheel axle in the region of the wheel arch (20) of a motor vehicle (12), comprising a substantially planar main body (24),
**characterised in that** a first bearing point (26) formed on the main body (24) is provided and can be rotatably connected to a transverse link (28) of the motor vehicle (12), and a second bearing point (30) formed on the main body (24) is provided and can be coupled to a wheel carrier (18) or a steering tie rod, so that the underbody panelling part (22) can be pivoted about the first bearing point (26) with a pivoting of the wheel carrier (18).

2. A subassembly comprising an underbody panelling part according to claim 1, **characterised in that** the second bearing point (30) is connected via a pendulum rod (32) to the wheel carrier (18) or the steering tie rod.

3. A subassembly according to claim 2, **characterised in that** the pendulum rod (32) is mounted on both sides via ball joints (34, 36).

4. A subassembly comprising an underbody panelling part according to claim 1, **characterised in that** the second bearing point is connected via a rigid connection to the wheel carrier (18) or the steering tie rod.

5. A subassembly according to any one of claims 2 to 4, **characterised in that** a rotary joint is provided at the first bearing point (26) and connects the underbody panelling part (22) to the transverse link (28).

6. A subassembly according to claim 5, **characterised in that** the rotary joint is a sealed rotary plain bearing.

7. A subassembly according to any one of claims 2 to 6, **characterised in that** a gap between the underbody panelling part (22) and an adjacent component is covered by a brush seal.

8. A subassembly according to any one of claims 2 to 7, **characterised in that** the underbody panelling part (22) has an upwardly curved edge (40) that is arranged at the front in the vehicle longitudinal direction (x).

9. A subassembly according to any one of claims 2 to 8, **characterised in that** the underbody panelling part (22), at an end (42) thereof directed towards the rear end of the vehicle, delimits an air duct which is oriented substantially horizontally.

10. A subassembly according to claim 9, **characterised in that** the air duct is formed by a gap (Δz) between the underbody panelling part (22) and an adjacent vehicle body portion (44).

## Revendications

1. Capotage de dessous de caisse (22) d'un essieu dans la zone du chapeau de moyeu (20) d'un véhicule (12) qui comporte un corps de base (24) essentiellement en forme de plaque,
**caractérisé en ce qu'**
il est prévu un premier point d'appui (26) formé sur le corps de base (24) qui peut être relié en étant mobile en rotation avec un bras de suspension transversal (28) du véhicule (12) ainsi qu'un second point d'appui (30) formé sur le corps de base (24) pouvant être couplé à un support de roue (18) ou à une barre d'accouplement de sorte que le capotage de dessous de caisse (22) puisse pivoter autour du premier point d'appui (26) lorsque le support de roue (18) pivote.

2. Ensemble ayant un capotage de dessous de caisse conforme à la revendication 1,
**caractérisé en ce que**
le second point d'appui (30) est relié au support de roue (18) ou à la barre d'accouplement par l'intermédiaire d'une barre oscillante (32).

3. Ensemble conforme à la revendication 2,
**caractérisé en ce que**
la barre oscillante (32) est montée de part et d'autre par l'intermédiaire d'articulations sphériques (34, 36).

4. Ensemble ayant un capotage de dessous de caisse conforme à la revendication 1,
**caractérisé en ce que**
le second point d'appui est relié au support de roue (18) ou à la barre d'accouplement par une liaison rigide.

5. Ensemble conforme à l'une des revendications 2 à 4,
**caractérisé en ce que**
sur le premier point d'appui (26) il est prévu une articulation à charnière qui relie le capotage de dessous de caisse (22) avec le bras de suspension transversal (28).

6. Ensemble conforme à la revendication 5,
**caractérisé en ce que**
l'articulation à charnière est un palier a glissement rotatif étanche.

7. Ensemble conforme à l'une des revendications 2 à 6,
**caractérisé en ce qu'**
l'intervalle situé entre le capotage de dessous de caisse (22) et un composant voisin est recouvert par un joint d'étanchéité à brosses.

8. Ensemble conforme à l'une des revendications 2 à 7,
**caractérisé en ce que**
le capotage de dessous de caisse (22) a un bord avant (40) dans la direction longitudinale du véhicule (x) qui est cintré vers le haut.

9. Ensemble conforme à l'une des revendications 2 à 8,
**caractérisé en ce que**
le capotage de dessous de caisse (22) délimite à son extrémité (42) dirigée vers l'arrière du véhicule, un canal d'air qui est orienté essentiellement horizontalement.

10. Ensemble conforme à la revendication 9,
**caractérisé en ce que**
le canal d'air est formé par un intervalle (Δz) entre le capotage de dessous de caisse (22) et un segment de carrosserie (44) voisin.
